Europäisches Patentamt

European Patent Office

Office européen des brevets

(19)

(11) Publication number: **0 401 051**
**A2**

# EUROPEAN PATENT APPLICATION

(12)

(21) Application number: **90306032.5**

(22) Date of filing: **01.06.90**

(51) Int. Cl.⁵: **B28B 7/38, B28B 19/00**

The application is published incomplete as filed (Article 93 (2) EPC). The point in the description at which the omission obviously occurs has been left blank.

The title of the invention has been amended (Guidelines for Examination in the EPO, A-III, 7.3).

(30) Priority: **01.06.89 JP 139783/89**
**01.06.89 JP 139784/89**
**21.09.89 JP 245509/89**
**24.11.89 JP 305075/89**
**19.12.89 JP 329016/89**
**05.02.90 JP 25478/90**
**16.02.90 JP 35884/90**
**16.02.90 JP 35885/90**

(43) Date of publication of application:
**05.12.90 Bulletin 90/49**

(84) Designated Contracting States:
**BE DE FR GB IT**

(71) Applicant: **KABUSHIKI KAISHA ZOKEI**
**52-7, Nukudo**
**Fujinomiya-shi, Shizuoka(JP)**

(72) Inventor: **Sekine, Sukeyoshi**
**c/o Kabushiki Kaisha Zokei, 52-7, Nukudo**
**Fujinomiya-shi, Shizuoka(JP)**

(74) Representative: **Lamb, John Baxter et al**
**MARKS & CLERK 57/60 Lincoln's Inn Fields**
**London WC2A 3LS(GB)**

(54) **Concrete non-cure coating material, and concrete products with surface pattern or decoration using said material and production process therefor.**

(57) There is disclosed a concrete non-cure coating material for preventing the surface of cement, mortar or the like, which is in contact with said material, from setting or hardening. The invention also provides a concrete product or concrete structure with surface decoration produced by disposing the concrete non-cure coating material on the surface of the decorative material or on the inner surface of a form for concrete moulding, as well as a production process therefor.

EP 0 401 051 A2

# Concrete non-cure coating material, as well as concrete products or concrete structural products with surface pattern or decoration using said material and production process therefore

## FIELD OF THE INVENTION

The present invention concerns a concrete non-cure coating material for preventing the surface of cement mortar, etc. which keeps in touch with said material from setting or hardening. Further, the present invention also relates to a concrete product or concrete structural product with surface patterning or decoration in which the concrete non-cure coating material is disposed to the surface of a decorative material or to the surface of a form, as well as a process for producing thereof. The present invention also relates to a concrete block with a decorative material by using the concrete non-cure coating material in which the decorative material is secured to a concrete base. The invention also relates to a process for producing a patterned or decorated surface of concrete molding product and relates to patterned or decorated concrete molding product with an aim of producing them by using a form having a concrete non-cure coating material layer disposed on the surface. Furthermore, the present invention also relates to a concrete structural product and a concrete structural product with surface pattern or decoration by using sand particles coated with the concrete non-cure coating material, as well as a process for producing thereof.

## Description of the Prior Art

Although there has been a concrete cure retarder which retards cure of concrete to some extent, a concrete non-cure material for preventing the surface of cement mortar, etc. which keeps in touch with said material from setting or hardening has not yet been developed.

Further, concrete products with decoration having a decorative material on the surface have been produced by laying the decorative material to the inner surface of a form by way of a concrete cure retarder, disposing appropriate reinforcements to the inside thereof and then placing concrete. An adhesive which is defoliated upon swelling with water and paper or cloth impregnated with an acid is appended in a form, placing a concrete, applying steam cure and after leaving at a normal temperature for about seven days, the form is removed and then water washing is applied to expose aggregates. Tile or glass is appended collectively by means of a plastic sheet or vinyl sheet to the inner surface of a form, or tile, etc. are appended with a surface being on the side of a form by means of a both-face adhesive tape. Plastic resin joint is fit between each of the tiles, etc. for joint and, after applying required reinforcements, concrete is placed and uniformly and intensely packed by applying vibrations to the form. Then after curing of the concrete by steam cure under heating, the form is removed and then paper on the surface of the tile is peeled off by wetting with water, the synthetic resin at the joint portion is detached and, thereafter, mortar or cement paste is scraped off by means of a wire brush, etc.

As another method, concrete is placed after disposing necessary reinforcements in a form and satisfactorily packed by applying vibrations to the form. Then, after water on the surface of the concrete is drained, mortar is thinly extended uniformly, on which a decorative material such as a slate, tile, brick, etc. is bonded thereon and cement mortar is grouted to the joint for slates, etc. and then the surface of the slate was washed with water to complete the decorative surface.

Further, conventional concrete blocks with decoration have such a structure in which anchors disposed on the rear face of the decorative material are thrust into a concrete base so one decorative material with one concrete base.

Further, in conventional solid concrete decorative products, the surface is roughened by water washing while the concrete is not yet cured or applying sand blast on the surface after the cure of the concrete.

Further, a cure retarder may be used depending on the case for keeping the surface of the concrete uncured.

Further, in a case of disposing a cavity for piping space in a concrete structure after curing, concrete has been placed after provisionally attaching a pipe made of foamed styrol or paper for piping space.

Although the cure retarder can retard the cure of the concrete, it can not prevent the surface of cement mortar which keeps in touch with it from setting or hardening. Accordingly, there are various problems in a case of producing concrete products by using the concrete cure retarder.

In the method of using the cure retarder, the retarder is often used for the surface of small and mass productive concrete products but a form has to be removed within a cure retarding period (that is, before curing of the concrete.)

Accordingly, in the production process of applying steam cure before the removal of the form, the form has to be removed within a cure retarding period and water washing has to be applied and the removed products are produced unevenly on account of the difference of cure period and the timing of removal is conducted, accordingly, this method can not be adopted for the structural material requiring as much as two weeks upto the removal of the form.

Then, the process of scraping off cured cement paste deposited to the surface of tiles, etc. after removal of the form, not only requires manual labours but also involves a worry of injuring the surface of decorative material.

Further, the process for manually arranging slates, tiles, etc. one by one, requires skilled technics, as well as needs a labour of washing out contaminations at the surface of slates, etc., which often causes defoliation or makes the finishing to the joint areas not uniform. When the method is applied to a structural products, since the underlying concrete has often been cured already, it is required to dispose an underlying layer again with cement mortar and special technic and a device of operation are required as the countermeasure for defoliation, etc.

The conventional concrete block with decoration can be employed in a case where decorative material is flat or the entire surface of the block is covered. However, it can not be adopted in a case of disposing a plurality of uneven decorative materials on the surface of the block or intending to provide a large amount of protrusion for the decorative material. In addition, the operation for securing anchors requires time-and labour-consuming. Further, in a case of conventional concrete blocks with decoration in which tiles, etc. are secured or deposited by using concrete or cement mortar, the cement mortar is deposited to the surface of the tiles, etc. so that it requires much time and labor for removal and may injure the surface of the tiles.

Further, in the conventional production of three dimentions concrete decorative products, if the timing of washing uncured concrete with water is too early after placing concrete, the concrete is flushed away excessively, whereas if it is washed too late, removal of a required portion becomes difficult. Further, roughening or preparing the decorative surface to the concrete by means of sand blast is not only time- and labour-consuming but also may involve a risk of causing public pollutions due to dusts and noises during fabrication. Further, use of the cure retarder for the molded surface requiring a form involves a problem that the effect of the cure retarder is rapidly lost if the removal of the form is delayed due to the cure of the concrete main body or like other reason, by which the cure of the surface is initiated failing to keep a predetermined uncured state till the removal of the form.

Further, in a conventional method of disposing a cavity for piping space in the concrete structural product after curing, since the specific gravity of a tube made of foamed styrol or paper for piping space is less than that of the concrete, even if concrete is placed after provisionally attaching the pipe to the form, the pipe rises upwardly so that it is difficult to obtain a concrete structural product having the piping space at a correctly desired position.

SUMMARY OF THE INVENTION

According to the present invention, since a concrete non-cure coating material for preventing the surface of cement mortal, etc. which keeps in touch with said material from setting or hardening, comprising a resin layer or powder made by hardening a liquid which is prepared by mixing an alkali-swollen agent or water-swollen agent and a high water absorptive polymer and/or monomer can be provided and those problems that could not be overcome by the conventional concrete cure retarder can be dissolved all at once. Further, concrete products or concrete structural products with surface pattern or decoration that can not be produced in the prior art can be obtained by using the concrete non-cure coating material of the present invention.

In accordance with the present invention since decorate materials are laid by way of a concrete non-cure coating material to the inner surface of a form, defoliation is easy even if more than several days have been elapsed till the removal of the form and there is no worry that the cement mortar, etc. are strongly cured and deposited to the surface of he decorative materials. Further, in a case of not using the decorative material and a concrete non-cure coating materials are laid to the inner surface of the form, since the surface of the concrete in contact with the form is kept uncured even after a sufficient strength is developed in the concrete main body, uneven surface can easily be obtained by washing the surface with water after the removal of the form and attaching of decorative material or like other surface patterning can be conducted easily. Thus, conventional operation of mechanically roughening the surface of the concrete is no more necessary.

The present invntion can dissolve the problems in the prior art by provisionally attaching decorative materials by way of a concrete non-cure coating material and has succeeded in a mass production of concrete products or concrete structural products with a plurality of decorative materials.

Further, the present invention can overcome the foregoing problems in the prior art by provisionally attaching decorative material by way of a concrete non-cure coating material layer to the inner surface of a form or disposing such a form applied a concrete non-cure coating material layer to its inner surface without attaching the decorative material, placing concrete to the inside of the form, keeping the concrete in touch with the concrete non-cure coating material layer in an uncured state, and then removing said uncured surface by water washing.

Further, the present invention has succeeded in obtaining a concrete structural product capable of easily perforating a piping space, etc. after curing of the concrete by mixing sand particles coated with the concrete non-cure coating material with concrete, followed by solidification.

Furthermore, the present invention has succeeded in the mass production of concrete products or concrete structural products such as concrete blocks having and exposing a plurality of decorative materials in three dimentions by securing a predetermined depth with an embedding agent that can be removed by water washing, provisionally attaching the decorative materials, placing concrete and removing the embedding agent by water washing after the cure of the concrete.

According to the present invention, a concrete non-cure coating material for preventing the surface of cement mortal, etc. which keeps in touch with said concrete non-cure coating material from setting or hardening is provided.

The before mentioned non-cure coating material comprises a resin layer or powder made by hardening a liquid prepared by mixing an alkali-swollen agent or water-swollen agent and a high water absorptive polymer and/or monomer. Also, the alkali-swollen agent comprises a thermosetting polyester, polyvinyl alcohol and polyvinyl acetal and the water-swollen agent comprises vinyl acetate resin, and the mixing ratio of the alkali-swollen or water-swollen agent and the high water absorptive polymer and/or monomer is from 20 to 80% of the high water absorptive polymer and/or onomer based on the entire amount (by volume). Further, a concrete non-cure coating material layer is formed by means of coating or spraying in a case of liquid, while the concrete non-cure coating material layer is formed by mixing with a water soluble adhesive or with an adhesive and then coating in a case of a powder.

Besides the present invention provides a process for producing a concrete product with surface decoration, which comprises provisionally attaching a decorative material to the inner surface of a form by way of a concrete non-cure coating material layer, applying a provisionally grouting treatment to the joint portion of each decorative material, incorporating reinforcements as required, then placing and curing a concrete in the form, removing the form and then removing the concrete non-cure coating material layer on the surface of the decorative material.

And the present invention provides a process for producing a concrete structure with surface decoration, which comprises, upon constructing a concrete building structure, disposing a concrete non-cure coating material layer to each of the inner surfaces of an inner form and an outer form thereof, or provisionally attaching decorative material by way of the concrete non-cure coating material layer, applying provisional grouting to the joint portion for each of the decorative materials, incorporating necessary reinforcements between the inner form and the outer form, and then, after placing concrete in the form and removing the form, removing the concrete non-cure coating material and uncured concrete.

And the present invention provides a process for producing the surface of a concrete molding product with surface decoration, which comprises provisionally attaching decorative material to the inner surface of a form, disposing a concrete non-cure coating material layer to the surface of said decorative material, placing a concrete to the inside of the form, then removing the form after the cure of the concrete and then washing the surface of the concrete with water thereby removing uncured concrete.

Further the present invention provides a process for producing a concrete product with surface decoration, which comprises coating a concrete non-cure coating material layer to the inner wall of a box-like form, laying decorative material by way of joint materials, incorporating reinforcements upto a predetermined height, placing a concrete in the form, removing the form after the cure of the concrete, washing the surface of the decorative material with water and removing the joint materials.

The before mentioned inner wall of the form is a bottom wall or a side wall.

Besides the present invention provides a process for producing a concrete product or concrete structure with surface decoration, which comprises attaching decorative materials at a predetermined distance to the outside of a cylindrical support, fixing said support with the decorative materials to a form by way of a concrete non-cure coating material layer between the outer surface of each of the decorative materials and the inner surface of the form, incorporating reinforcements to the inside of said support, placing a concrete, removing the form after the cure of the concrete and then removing the uncure concrete on the concrete wall surface by water washing.

And the present invention provides a process for producing a concrete product with surface decoration, which comprises disposing decorative materials side by side on a porous support, setting the decorative materials in a form with the support being upside, grouting a concrete non-cure coating material layer or sodium silicate resin into a gap between the bottom wall of the form and the decorative material, incorporating reinforcements above the support in the form, placing concrete, removing the form after the curing of the concrete and then removing the concrete non-cure coating material layer or sodium silicate resin by water washing.

And the present invention provides a process for producing a concrete product with surface decoration, which comprises disposing decorative materials side by side on a porous support by way of a spacer, setting the decorative materials in a form with the support being upside, disposing an optional number of height controlling spacers at an appropriate position of said support thereby controlling the height of the support, grouting a concrete non-cure coating material layer or socium silicate resin between the bottom wall of said form and the surface of said decorative materials, incorporating reinforcement above the support materials, placing a concrete, removing the form after the cure of the concrete and then removing said concrete non-cure coating material layer or sodium silicate resin by water washing.

And the present invention provides a process for producing a concrete product with surface decoration, which comprises securing wooden blocks each by a fixing means on a support, inserting a group of wooden blocks in a form with the support being upside, disposing a concrete non-cure coating material layer to the surface of the group of said wooden blocks, grouting sodium silicate resin into the joint portion for each of wooden blocks, incorporating reinforcements in said form, placing concrete, removing the form after the cure of the concrete and then removing the concrete non-cure coating material layer at the surface of the wooden block by water washing.

The before mentioned decorative material is made of stone, sintered product, tile, metal material, glass or wooden block. Also the support is made of mesh plate, punched metal, expansion metal, metal wire-lattice plate, resin mesh plate, glass fiber mesh plate or carbon mesh plate.

Further, the before mentioned height-controlling spacer comprises a support cylinder and a bolt or device for controlling the height of said supporting cylinder.

Besides the present invention provides a process for producing the surface of a concrete molding product at joint portions, which comprises disposing a concrete non-cure coating material layer to the inner surface of a form of a concrete structure which forms a secondary placing side, placing a concrete to the inside of the form, and removing the uncured concrete by water washing from the surface of the concrete after removal of the form.

And the present invention provides a process for producing the surface of a concrete molding product with surface decoration, which comprises disposing a cylindrical form having a concrete non-cure coating material layer disposed to the outer wall thereof into a form for a concrete structure, placing a concrete between said cylindrical form and the form for the structure, removing the forms after the cure of the concrete and water washing the surface removed with the cylindrical form thereby removing the uncured concrete.

The before mentioned cylindrical form is a circular cylindrical or square cylindrical form.

Besides the present invention provides a process for producing the patterning or decorative surface of a concrete molding product, which comprises incorporating reinforcement in a cylindrical form having a concrete non-cure coating material layer to the inner wall thereof, placing a concrete, removing a form after the cure of the concrete and then water washing the outer wall of said constructed concrete post thereby removing the uncured concrete.

The before mentioned cylindrical form is a circular cylindrical, square cylindrical, triangularly, hexagonaly or octagonaly form.

Besides the present invention provides a molding decorative material on the surface of a concrete molding product, wherein a concrete maintained uncured by the concrete non-cure coating material layer deposited to the surface of concrete is removed by water washing thereby developing a three dimensional pattern.

And the present invention provides a concrete structure prepared by coating sand particles coated with a concrete non-cure coating material and then mixing them with concrete and compressing and curing them.

And the present invention provides a process for producing a concrete structure with surface decoration, which comprises scattering sand particles or gravels coated with the concrete non-cure coating material on the surface of placed concrete, before curing, and then water washing the surface of concrete after the cure of the concrete.

Also, the present invention provides a concrete non-cure coating material which is an embedding agent comprising a mixture of sodium silicate and a curing agent incorporated with reinforcing agent and which is removable by water washing.

Besides the present invention provides a process for producing a concrete product or concrete structure with surface decoration, which comprises disposing a plurality of decorative materials on a bottom plate of a box-like form, grouting an embedding agent to a predetermined depth into a gap between said bottom plate and said decorative materials, incorporating enforcements above said decorative materials, placing concrete, removing a form after the cure of the concrete and then removing the embedding agent between said decorative materials by water washing.

The before mentioned decorative material comprises stone material, sintered product, tile, metal material, glass or wooden block.

Further, the before mentioned concrete product or concrete structure with surface decoration comprises concrete block, concrete curtain wall, concrete centrifugal compaction product, concrete square or cylindrical pipe, or concrete box-culvert, etc. all of them having surface pattern or decoration.

The concrete non-cure coating material includes the following materials.

(1) A curing film layer prepared by mixing a high water absorptive polymer dissolved in an organic solvent with an alkali-swollen resin, mixing them with an addition of a curing agent and then coating or spraying the mixture, followed by curing.

(2) A water-swollen resin film layer incorporated with a water absorptive polymer prepared by mixing a monomer with a resin swollen by water and then coating or spraying the mixture with addition of a curing agent, followed by curing.

(3) An alkali-swollen resin film layer incorporated with a water absorptive polymer prepared by mixing an alkali swollen resin with a monomer, coating or blowing the mixture with addition of a curing agent, followed by curing.

(4) A coating material prepared from the above and formed into a sheet-like state.

(5) A coating material prepared by curing, pulverizing or powderizing the resin described above, which is kneaded with an adhesive swollen with or dissolved in water or kneaded with an adhesive and then spraying or coating the mixture to a form, followed by drying or curing.

(6) A cured film layer prepared by mixing under stirring a high water absorptive polymer and a monomer with an alkali-swollen resin, coating or spraying them with addition of a curing agent, followed by curing.

(7) A powder prepared by mixing a monomer with an alkali-swollen agent and then cured with addition of a curing agent.

(8) A powderized cured film layer prepared by mixing an alkali swollen resin or water swollen resin with high water absorptive polymer, mixing them with an addition of a curing agent, followed by curing.

Each of the materials as described above has a water absorbability, loses the balance upon initiation of water absorption and continues the instable state for a long period of time.

In the case of using a non-cure material layer comprising 50% of the high water absorptive polymer or a monomer, the depth to about 3 mm from the surface of the concrete is rendered uncure. Further, when a non-cure material layer comprising 80% of the high water absorptive polymer or monomer the depth upto 5 mm depth from the surface of the concrete is rendered uncure.

Further, a non-cure material layer comprising 30% of high water absorptive polymer or monomer keeps about 1 to 2 mm depth from the surface of the concrete uncured.

As the alkali-swollen resin or water-swollen resin described above, those easily swollen with alkali or water and keep instable state under synergistic effect with polymeric water-absorbing material are preferred such as thermosetting polyester, polyvinyl alcohol and polyvinyl acetal as alkali-swollen resin or vinyl acetate resin as water-swollen resin.

If the addition amount of the high absorptive polymer or monomer is less than 20%, cure instability is reduced failing to attain the purpose. On the other hand, since it is not necessary to increase the content of the polymer or monomer more than 80%, the preferred amount of the high water absorptive polymer or monomer incorporated is from 20 to 80%. Further, the concrete non-cure material layer according to the present invention may be scattered in the form of a powder in an appropriate amount to the surface of concrete upon use, so that it can be utilized also in a case of not using a form (for example, pavement, horizontal decorative or patterning surface, etc.). In this case, it is necessary to apply an appropriate pressure to the surface of the concrete.

The concrete non-cure coating material according to the present invention is either an alkali-swollen resin film layer incorporated with a water absorptive polymer or a water-swollen resin film layer incorporated with a water absorptive polymer so that it has an effect of causing swelling by absorption of an alkaline content or water content in the concrete and always conduct fine movements to hinder the crystal growth of cement at the portion which is in touch with said concrete non-cure coating material.

In the present invention, since the concrete non-cure coating material is disposed to the inner surface of a form or between the inner surface of the form and the decorative material, it has an effect of keeping the cement mortar or the cement paste uncured at the outer surface of concrete or the outer surface of decorative material till the removal of the form. Accordingly, it has an effect capable of effectively processing or patterning the surface of concrete or producing concrete products with decorative material.

In the present invention, since the decorative material is attached by way of the concrete non-cure material, a concrete products with a plurality of decorative mterials can be obtained by washing the decorative material with water after the removal of the form. The concrete non-cure material can easily be removed by washing with water at a pressure of 70 kg/cm$^2$.

Further, by fixing decorative materials to a perforated plate and setting them in a form, it can provide an effect of arranging decorative materials at predetermined positions when the concrete main body has cured and of obtaining the interior finish and exterior finish simultaneously.

Further, since decorative materials are disposed side by side by way of a space to a porous support plate, it has an effect of suspending them upwardly to uniform height even if the thickness of the decorative material varies and capable of developing uneven patteern on the side of the surface of concrete products. In the prior art, since a spacer, sand or foamed material has to be put on the surface side of the decorative material for attaining such a state, it has been labourious and time-consuming, as well as required highly skilled technic. In the present invention, however, there is an effect capable of attaining the purpose with ease. Further, in a case of securing the decorative materials in a state provisionally attached to the film on a support plte, since the arrangement of the decorative materials can be determined at a high accuracy upon provisional attachment, it can be applied to a case of drawing a pattern with a plurality of decorative materials. Furthermore, also in a case of using a wooden block, it is possible to make the operation more effective and improve the product without contaminating the wood grains by cement paste, etc.

Furthermore, when a height-controlling device for the support plate is disposed, height of the decorative material can be controlled without exerting a load of concrete to the decorative material.

In accordance with the present invention, since concrete is placed by way of the concrete non-cure material to the inner surface of a form, at the surface of the finish concrete remains uncured after removal of the form. Then, by washing the surface of the finish concrete with water, uncured concrete is flushed away to provide an effect of forming a roughened surface with fine unevenness or uneven decorative or patterning surface at the finish concrete surface.

The process according to the present invention has an effect capable of obtaining homogenous concrete molding decorative products with uneven decorative or patterning surface easily without requiring skill and free from worry of increasing labour, etc. Further, the roughening for the concrete surface at a required position can be obtained with water washing after the removal of a form and it is effective irrespective of the timing for removing the form.

In addition, it can provide an effect of disposing a vacant hole for piping, etc. with an identical diameter throughout the length, to be formed into concrete structural products, as well as of roughening the wall surface of said hole. Further, it has also an effect capable of easily roughening the outer surface of a circular or square cylindrical shape pillar.

According to the present invention, since the concrete non-cure material layer is deposited to the inner surface of a form, the surface of concrete in contact therewith always remains uncured. Further, since the concrete at the surface of the concrete molding products according to the present invention is in touch with the concrete non-cure material layer and always remains uncured so it can be removed by water washing, aggregated can constitute decorative material and the surface is roughened, which can make adherance upon jointing satisfactory and also adherance satisfactory upon joining other decorative material.

Further, according to the present invention. it has succeeded in obtaining concrete structural products in which piping space, etc. can easily be perforated after curing the concrete by coating sand particles with the concrete non-cure coating material and mixing them with concrete and solidified them.

Further, in accordance with the present invention, concrete structural products requiring no form (for example, pavement or horizontal decorative or patterning surface) can be effectively produced by scattering sand particles or gravels coated with the concrete non-cure coating material on the concrete-formed surface and washing the concrete surface with water after the cure of the concrete.

Furthermore, in accordance with the present invention, it has been succeeded in mass production of a concrete products having a plurality of decorative materials by securing a predetermined thickness with an embedding agent that can be removed with water washing provisionally attaching decorative material, placing concrete, and removing the embedding agent by water washing after the cure of the concrete. The depth of the gap between each of the decorative materials in this case can optionally be selected within a range of the thickness of the decorative material. Further, the embedding agent can be easily flushed out with a water under a pressure of about 70 kg/cm$^2$.

As the embedding agent, those materials which are liquid upon grouting and solidify relatively ready and can be removed easily by water washing are preferred. For instance, sodium silicate is used as the main component, to which a curing agent is mixed at a 1:1 ratio to form an embedding agent. As the curing agent, there can be mentioned, for example, inorganic acidic salt (NaHSO₄, NaHCO₃, NaH₂PO₄, KH₁SO₄, Na₂ O₄). Further, the curing agent usually incorporated with about 5% to 40% of a reinforcing agent for adjusting the hardness. As the reinforcing agent, there can be mentioned a hardness adjusting agent of sodium silicate (for example, glycoxal, tributyrolactone, propylene carbonate and citric acid.)

DESCRIPTION OF THE ACCOMPANYING DRAWINGS

Fig. 1 is a cross sectional view of a concrete product produced according to the present invention before removal of a form;

Fig. 2 is an enlarged cross sectional view for a tile;

Fig. 3 is a cross sectional view of another embodiment of the present invention before removal of a form;

Fig. 4 is a cross sectional view of stone material;

Fig. 5 is a cross sectional view of an embodiment of constructing a wall structure;

Fig. 6 is a cross sectional view in an intermediate step of another embodiment;

Fig. 7 is a cross sectional view thereof upon removal of a form;

Fig. 8 is a cross sectional view in an intermediate step of another embodiment;

Fig. 9 is cross sectional view upon removal of a form thereof;

Fig. 10 is a cross sectional view in the course of applying a concrete block provisionally adhered with tiles on the sides during the step of an embodiment of the present invention;

Fig. 11 is a cross sectional view in an intermediate step of an embodiment in which tiles are provisionally adhered on the bottom of a form;

Fig. 12 is a cross sectional view in an intermediate step of an embodiment using stone material;

Fig. 13 is a plan view of a product thereof;

Fig. 14 is a cross sectional view for a portion of a sheet appended with stone material;

Fig. 15 is a transversal plan view in an intermediate step of other embodiment;

Fig. 16 is a front elevational view for a portion of the product;

Fig. 17 is a transversal plan view in an intermediate step in the case of producing a cylindrical pillar product;

Fig. 18 is a cross sectional view for a portion of other embodiment in which decorative material is fixed to a support;

Fig. 19 is a cross sectional view for a portion in which the decorative material attached with the support shown in Fig. 18 is placed in a form;

Fig. 20 is an enlarged cross sectional view for a portion of an embodiment using a height controlling spacer;

Fig. 21 is a cross sectional view for a portion of the embodiment shown in Fig. 20 placed in a form;

Fig. 22 is a cross sectional view in which a wooden block is secured to a support;

Fig. 23 is a plan view thereof;

Fig. 24 is a cross sectional view for a portion thereof placed in a form;

Fig. 25 is a cross sectional view of an embodiment forming a joint surface;

Fig. 26 is a side elevational view upon removal of the form thereof;

Fig. 27 is a front elevational view for a portion after the removal of the form and water washing thereof;

Fig. 28 is a cross sectional view for a portion in intermediate step of other embodiment;

Fig. 29 is a cross sectional view for a portion after removal of a form and water washing thereof;

Fig. 30 is a cross sectional view for a portion in the intermediate step in other embodiment;

Fig. 31 is a cross sectional view for a portion after the removal of the form and water washing thereof;

Fig. 32 is a cross sectional view in the intermediate step of an embodiment having a square cross section;

Fig. 33 is a cross sectional view for a portion in the intermediate step of other embodiment;

Fig. 34 is a cross sectional view for a portion after disposing cavity for piping space thereof;

Fig. 35 is a cross sectional view for a portion in the intermediate step of other embodiment;

Fig. 36 is a cross sectional view for a portion after pulverization in a cylindrical form thereof;

Fig. 37 is a cross sectional view before placing concrete in the processing step of other embodiment according to the present invention;

Fig. 38 is a cross sectional view after placing concrete thereof; and

Fig. 39 is a plan view of the product thereof.

DESCRIPTION OF PREFERRED EMBODIMENTS

Example 1

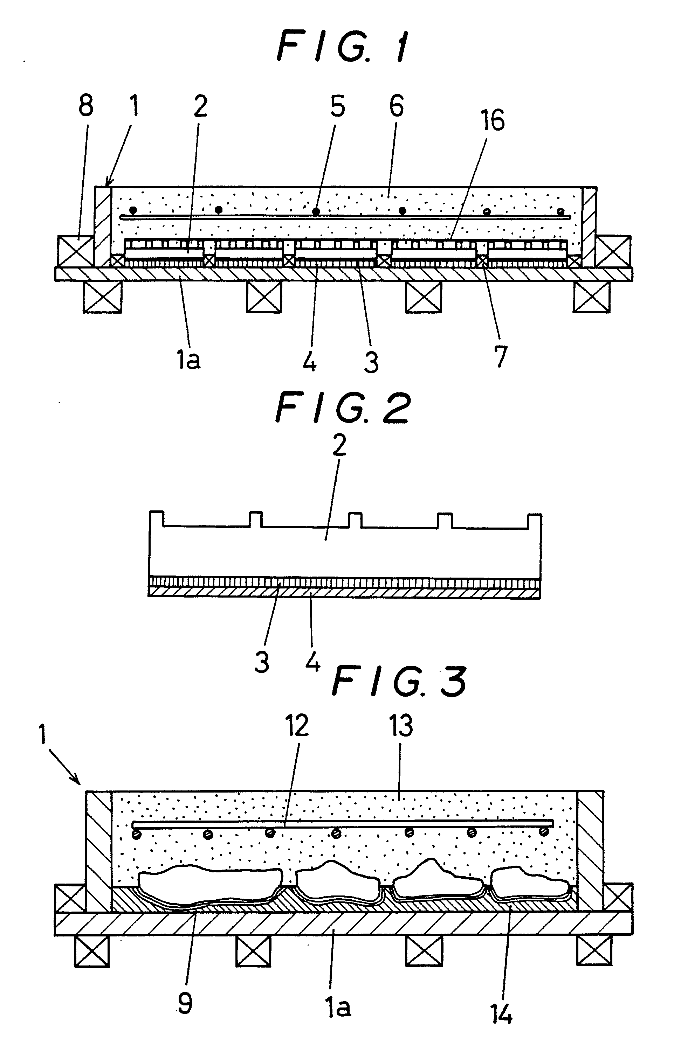

The present invention will be explained by way of its preferred embodiment referring to Figs. 1 and 2.

A releasing agent layer 3 is disposed to the surface of tiles 2 laid on the inner surface of a form 1 and, after drying, a concrete non-cure coating material layer 4 comprising a mixture of 60 parts of a polyester resin and 40 parts of a monomer and incorporated with 1 to 5 parts of a mixture comprising 55% of methyl ethyl ketone peroxide and 45% of dimethyl phthalate as a curing agent is disposed to the upper surface thereof (about 1 mm thickness), and the surface of the tile 2 is appended to the bottom 1a of the form 1 by using a both-face adhesive tape. Then, reinforcements 5 are disposed in the form 1 and concrete 6 is placed. In such a state, the form 1 is vibrated with a known machine to compact the filled concrete. In the drawing, 7 is a joint material such as joint stripe, formed resin or rubber, 8 is an outer form and 16 is collecting mesh. When the concrete is steam-cured being attached with the form 1 to improve the strength and, when the form is removed and the surface of the tile 2 is washed with water, deposite cement can be flushed away easily.

Example 2

Another embodiment of the present invention will be explained referring to Figs. 3 through 5.

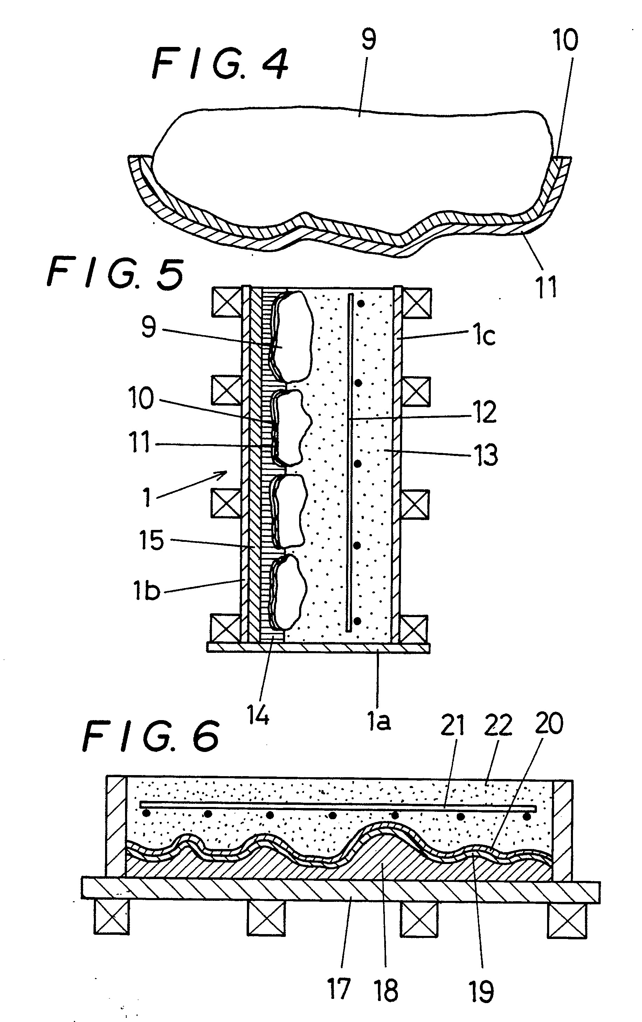

In Figs. 3 and 4, a releasing agent layer 10 is disposed on one surface of stone material 9 (on the side of the bottom plate 1a of the form 1) and, after drying, a concrete non-cure coating material layer 11 comprising a mixture of 90 parts of polyvinyl alcohol and 10 parts of a water absorbing polymer is disposed. The stone material 9 is laid in the form 1 by way of a stone fixing resin 14. Then, reinforcements 12 are arranged by a required amount above the stone material 9 and then concrete 13 is placed in the form 1. The form 1 is vibrated as required and left as it is to cure the concrete 13 (for example, for seven days). Then, the form is removed and the surface of the stone material 9 is washed with water to remove deposits such as uncured concrete to obtain a concrete product according to the present invention.

Fig. 5 shows production of a concrete structure.

As described above, a releasing agent layer 10 is formed to the surface on one side of a stone material 9 and, after drying, the same concrete non-cure coating material layer 11 as described above is disposed to the upper surface. The stone material 9 is arranged and fixed by way of a stone fixing resin or joint filler 14 to a stone fixing plate 15, which is fixed to the inside of a side frame 1b of the form 1, reinforcements 12 are arranged by a required amount and then concrete 13 is placed between the stone material 9 and the other side frame 1c and the bottom frame 1a. After the cure of the concrete, the form is removed and the surface of the stone material 9 is washed with water to remove uncured concrete to obtain a concrete structure with decorative material according to the present invention. In this embodiment, if the stone material is heavy and large, a stone material fixing plate and a fixing resin are used so as not to displace the position thereon.

Example 3

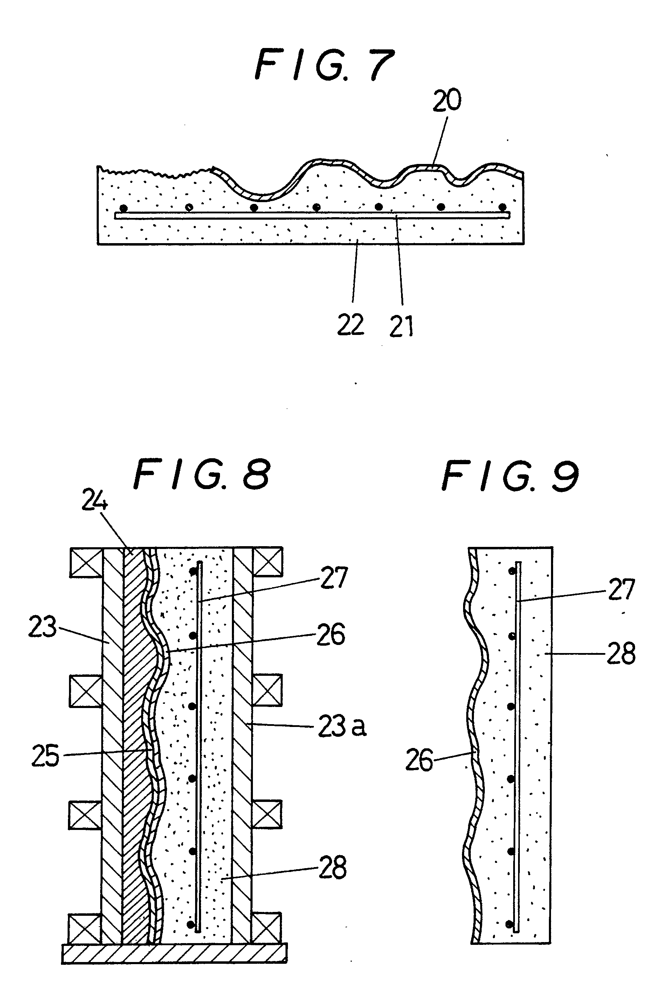

The process of the present invention will be explained referring to an embodiment shown in Figs. 6 and 7.

A female form 18 disposed in a form 17. After disposing a releasing agent layer 19 to the surface of the female form 18 and disposing a concrete material layer 20 to the surface of the releasing agent layer 19, reinforcements 21 are assembled at an appropriate height and then concrete 22 is placed into the form 17. After the cure of the concrete, the form is removed (Fig. 7) and, when the concrete non-cure material layer 20 and the uncured concrete are removed with water washing (upper surface on the left in Fig. 7), a portion of an appropriate aggregates is exposed to the surface and concrete molding decorative material with decorative material (for example, pebble stone) being exposed and combined with unevenned shape can be obtained.

Example 4

The process according to the present invention will be explained referring to an embodiment shown Figs. 8 and 9.

A female form 24 is fixed to the inner surface of one form 23. Then, a releasing agent layer 25 is disposed to the inner surface of a female form 24, a concrete non-cure material layer 26 is disposed to the inner surface of the releasing agent layer 25, reinforcements 27 are assembled between the concrete non-cure material layer 26 and the other form 23a and concrete 28 is placed into a gap between the frames 23 and 23a. When the concrete 28 is cured. the form is removed. In this case, since the form is removed occurs along the releasing agent (layer 25, a concrete molding decorative product can be finished by removing the concrete non-cure material layer 26 and removing uncured concrete on the surface of the concrete with water washing. This embodiment can be applied, for example, in a case of forming a vertical concrete wall surface.

Explanations have been made in both of examples 3 and 4 in a case of using the females forms 18 and 24 but the female forms 18 and 24 are not always required. In the case of disposing the concrete non-cure material layer to the inner surface (or the bottom surface) of the form, substantially flat or roughened surface can be obtained entirely by applying water washing after the removal of the form. That is, a female form is used for expressing an esthetic surface by molding but the female form is not necessary for obtaining slight uneven surface for the entire part. Further, the ratio of mixing the water absorbing resin or the thickness of the concrete non-cure material layer is adjusted depending on the depth of the desired unevenness at the surface of the obtained concrete.

Although the explanations have been made for a concrete molding decorative product of a predetermined size, uneven pattern can be molded entirely or partially to the surface of the concrete structure.

## Example 5

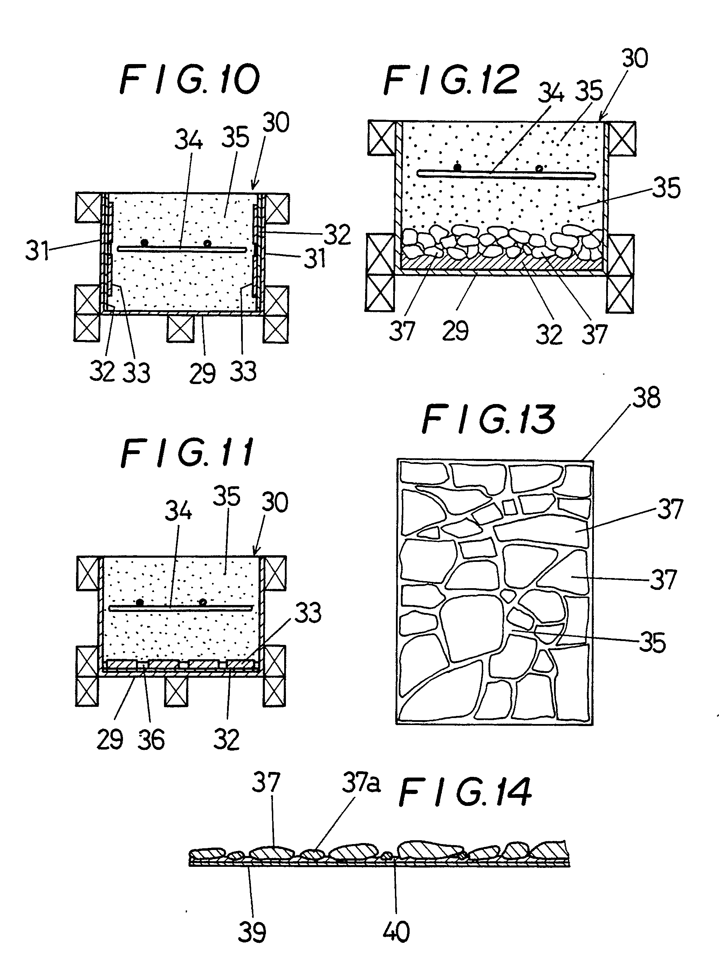

In the embodiment shown in Fig. 10, a concrte non-cure material layer 32 is coated on the inner wall of side plates 31, 31 of a form 30 disposed vertically on a bottom plate 29. Then, after provisionally attaching tiles 33 to the inside of the concrete non-cure material layer 32, reinforcements 34 are incorporated at an appropriate portion in the form 30 and then concrete 35 is placed. Subsequently, after normal temperature curing or steam curing, when the form is removed and the concrete non-cure material layer is removed by water washing, a concrete block attached with decorative material can be obtained.

In Fig. 11, a concrete non-cure material layer 32 is disposed on a bottom plate 29 of a form 30, tiles 33 are provisionally attached to the inner surface of the concrete non-cure material layer 32, joining material 36 are inserted, reinforcements 34 are appropriately incorporated and then concrete 35 is placed. Then, after normal temperature curing or steam curing, when the form is removed and the concrete non-cure material layer is removed by water washing. a concrete block attached with decorative material can be obtained.

## Example 6

In this embodiment, a concrete non-cure material layer 32 is disposed on a bottom plate 29 of a form 30 and stone materials 37, 37 are provisional attached thereon as shown in Figs. 12 and 13. Then, after incorporating reinforcements 34, concrete 35 is placed. Then, after normal temperature curing or steam curing, when the form is removed and the surface of the stone materials 37, 37 is washed with water to remove the concrete non-cure material layer and uncured concrete are removed, a concrete block 38 having patterned stone materials 37, 37 can be obtained.

In this embodiment, concrete non-cure material layer 32 alternatively may be prepared by kneading a powder of concrete non-cure material with an adhesive or with an adhesive which is soluble in water or alkali water, and stone materials 37, 37 are provisional attached by it.

In this embodiment if the protruding amount of stone materials 37 of different size is made substantially constant, the stone materials 37, 37a are adhered to a sheet 39 (which alternatively may be a mesh) by way of a concrete non-cure material layer 40, which are set as they are into a form 30 and then applied with subsequent procedures as described above.

## Example 7

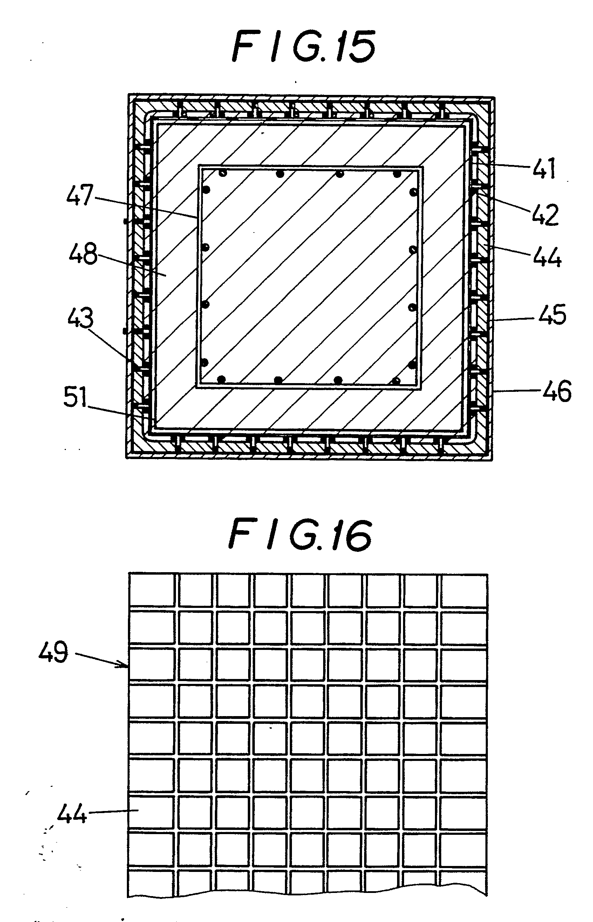

The present invention will be explained referring to other embodiments shown in Figs. 15 through 17.

After securing tiles 44 side by side to a square cylindrical form mesh plate 41 by way of a spacer 42 and under the presence of joining material 43 and providing a concrete non-cure covering material 45 to the surface of the tiles 44, a form 46 is attached to the outer side thereof. Then after disposing reinforcements 47 to the inside, concrete 48 is placed. After the cure of the concrete, when the form is removed and the surface of the tiles 44 is washed with water to remove the uncured concrete, a reinforced concrete post 49 decorated with tiles can be obtained.

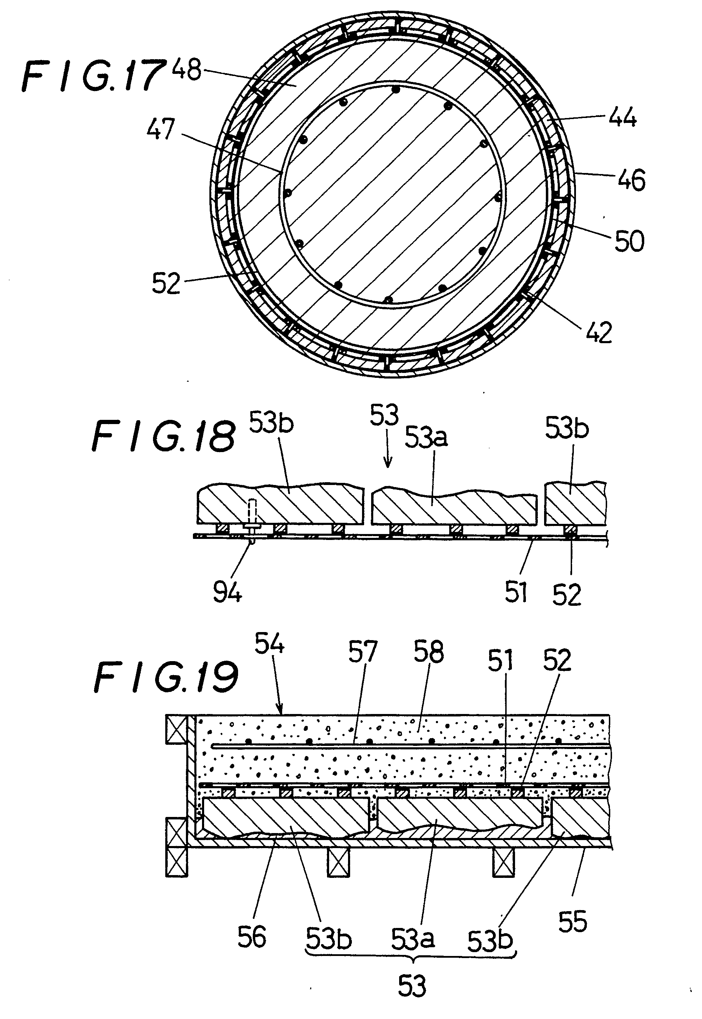

The square cylindrical form mesh plate 41 in the embodiment shown in Fig. 15, is displaced with a circular cylindrical form mesh plate 50 as shown in Fig. 17. Since the production process for the embodiment in Fig. 17 are identical as in Fig. 15 excepting that the shape is cylindrical, detailed explanations therefor are omitted. In the drawing 51, 52 denote metal gauge for securing tiles collectively.

In the foregoing embodiment since the tiles are arranged on a mesh plate, the tiles can be maintained at an exact position relative to each other and adhered reliably thereby free from defoliation or like other accidents.

## Example 8

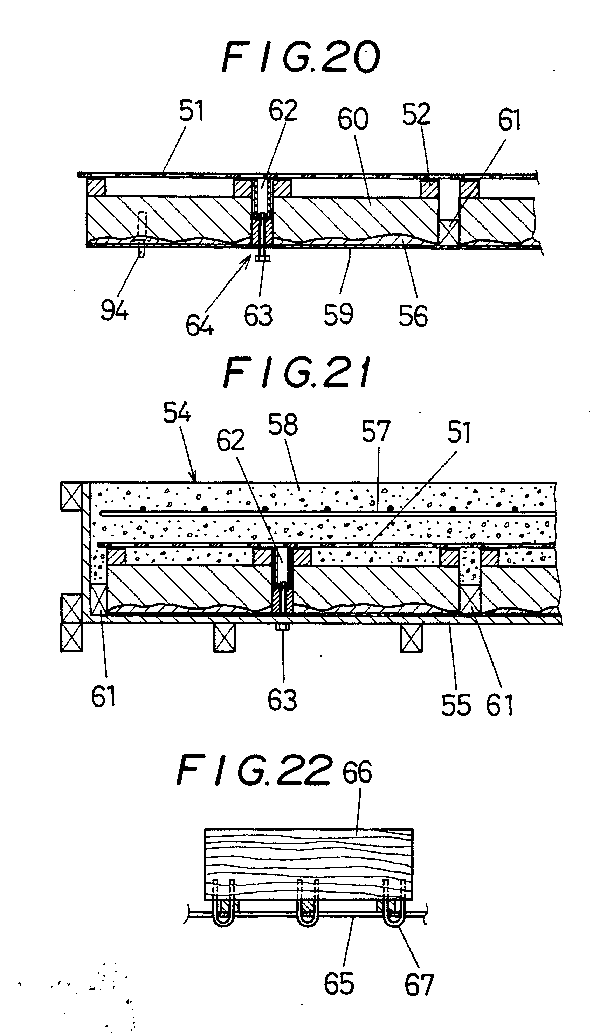

The present invention will be explained next referring to an embodiment shown in Figs. 18 and 19.

Stone materials 53 are arranged side by side to a mesh plate 51 by way of a spacer 52 and secured by blind-rivet 94 or by adhesive to form a mesh plate attached with the stone materials 53, which are enhoused within a form 54. Then, a joint filler agent 56 including a concrete non-cure material is filled into a gap between a bottom plate 55 of a form 54 and the surface of the stone material 53. Since the mesh plate 51 is used, relatively thin stone material 53a is suspended by thick stone materials 53b, 53b. Then, after incorporating reinforcements 57, concrete 58 is placed. Then, after normal temperature curing or steam curing, when the form is removed and the joint filler agent on the surface of the stone material 53 and the joint portion are flushed away, a patterned concrete block with unevenness of the stone material 53 can be obtained.

In this case, since the mesh plate is used, there is no requirement for using a spacer between it and the bottom plate of the form even if relatively thin stone materials are present together. Further, if the size of the block is relatively small or the strength of the mesh plate is great, the reinforcements can be saved.

Example 9

Explanation will now be made to the embodiment shown in Figs. 20 and 21. A decorative material 60 (tile, stone, etc.) having a concrete non-cure material layer 56 attached to the surface is appended to the surface of a collecting append sheet 59 (made of paper, synthetic resin film, cloth, etc.), and joint materials 61 made of foamed synthetic resin are set. A mesh plate 51 is fixed by blind-rivet 94 or by adhesive to the rear face of the decorative material 60 by way of a spacer 52 (or anchors of tiles). A height controlling spacer 64 comprises support cylinder 62 and a bolt 63 is set at an appropriate portion of the joint portion of decorative material 60. The decorative material 60, etc. are enhoused within a form 54 and, after adjusting the height between the bottom plate 55 of the form 54 and the mesh plate 51 by means of the bolt 63, reinforcements 57 are incorporated and then concrete 58 is placed. Then, after curing the concrete by a customary means, the form is removed and washed with water to remove the concrete non-cure material layer and the joint materials, as well as the bolt is removed and the joint portion is amended to obtain a concrete block structure attached with decoration.

Since the height of the mesh plate is controlled in this embodiment, it has a merit that the decorative material does not directly constitutes a support.

Example 10

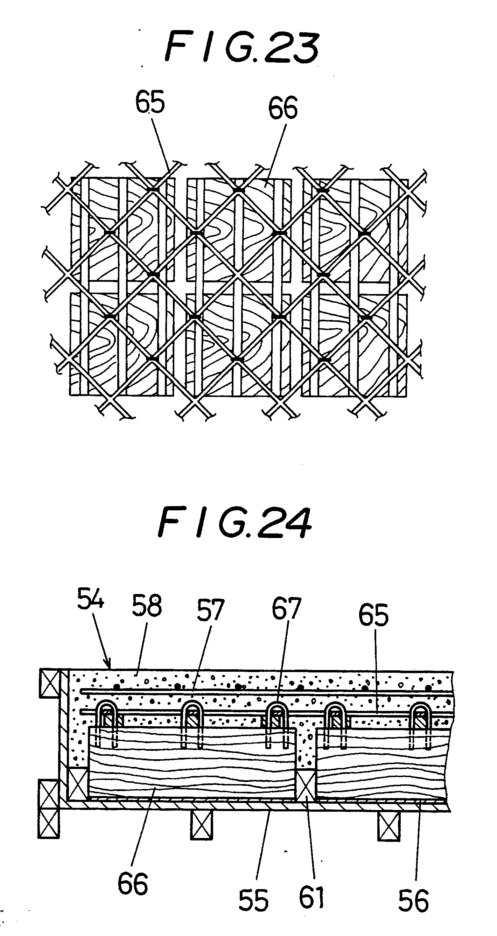

Explanation will then be made to an embodiment as shown in Figs. 22 through 24.

An expansion metal 65 and a wooden block 66 disposed at its surface with a concrete non-cure material layer 56 are secured by means of a U-shaped nail 67 which is set in a form 54. Then, after filling joint materials or joint filler agents 61, reinforcements 57 are incorporated and concrete 58 is placed. After appropriately treating the concrete with normal temperature cure, steam cure, etc., the form is removed after the cure of the concrete, and then the concrete non-cure material and the joint materials are removed, a concrete block with wood grain decoration can be obtained. In this embodimen, an expansion metal 65 alternatively may be replaced by steel mesh, resin mesh, carbon mesh, or glass fiber collective lot mesh.

In a case of using a wooden block in the prior art, the stability has been poor and cement paste deposited to the surface of wooden block which can not be removed easily. However, in accordance with the present invention. wooden blocks can be arranged reliably and fine wood grains can be exposed with no worry of intrusion of the cement paste into wood grains.

Example 11

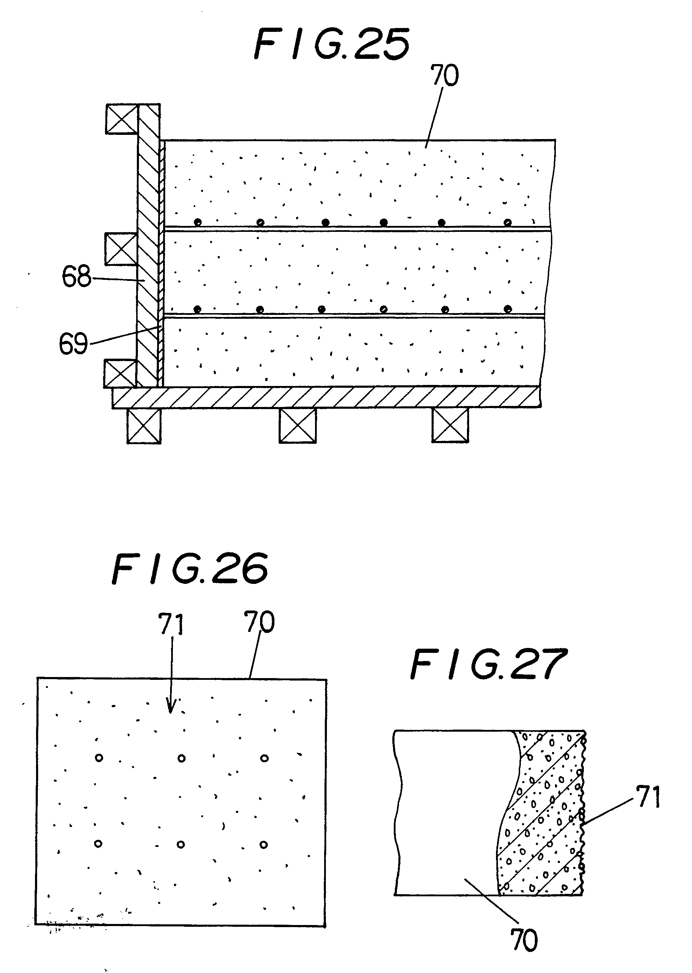

The present invention will be explained referring to an embodiment shown in Figs 25 through 27.

In this embodiment, a concrete joint surface is previously formed as roughened surface. A concrete non-cure material layer 69 is formed to the inner surface of a form 68 at a portion corresponding to a concrete joint surface and then concrete 70 is placed. Then, when the form 68 is removed and the joint surface 71 is washed with water to remove uncured concrete, uneven roughened surface with, for example, about 5 mm thickness is formed. Accordingly, if concrete is placed without applying uneven fabrication for giving unevenness to the joint surface upon initiation of the joint, old and fresh concretes can be joined firmly and integrally. In this embodiment, a form 68 alternatively may be replaced by a form having gravel pattern.

Although the explanations have been made for the joint surface, the process can be applied also to the adhesion of another articles to the wall surface of a concrete building structure, by which the concrete building structure and decorative material or other articles to be adhered can be firmly integrated and secured by means of concrete.

The concrete join surface has been roughened mechanically and applied with roughening fabrication so as to increase the adhesion between the concrete joint surface and adding concrete, decorative materials or other articles in the prior art. In the present invention, however, there is no additional requirement of applying such a roughening fabrication and it provides an effect for labour and time saving.

## Example 12

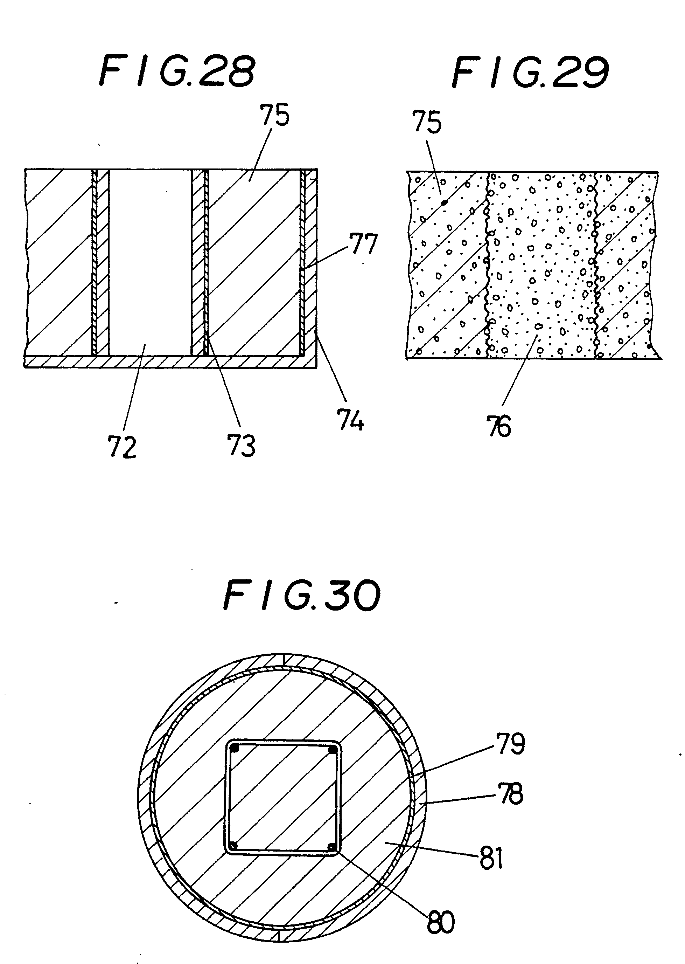

The present invention will be explained next referring to an embodiment shown in Figs. 28 and 29.

This embodiment shows a case of forming a vacant hole at the inside of a concrete structure. Such a vacant hole has been used, for example, for fitting to connect one end of a rod-like article afterward to the concrete structure which has usually been formed as a tapered hole for facilitating the removal of a form. Further, since there is no appropriate means for roughening the wall surface in the vacant hole, connection with the rod-like article has been insufficient.

In this embodiment, a concrete non-cure material layer 73 is disposed to the outer wall of a cylindrical form 72, which is set at an appropriate portion in a form 74 situated at the outer circumference. Then, concrete 75 is placed between the form 74 and the cylindrical form 72. After the cure of the concrete 75, when the form 74 is removed, the inside of the hole removed with the cylindrical form 72 is washed with water and the uncured concrete is removed, a vacant hole 76 having a roughened inner wall surface can be obtained. A vacant hole 76 of an optional cross sectional shape can be obtained depending on the shape of the form 72 such as a cylindrical or square cylindrical form. Further, the material used for conventional forms such as paper, wood, metal or synthetic resin may be used for the cylindrical form 72. If required, a concrete non-cure material layer 77 may also be disposed to the inner wall of the form 74.

In this embodiment, a cylindrical vacant hole 76 with a cross sectional area equal in the upper and the lower ends and with a roughened surface can be formed easily throughout the concrete structure.

## Example 13

The present invention will now be explained referring to other embodiments shown in Figs. 30 through 32.

In this embodiment, a concrete post having a roughened outer wall surface is molded, in which the cross sectional shape of the concrete post can optionally be selected, for example, as cylindrical or square shape. That is, a concrete non-cure material layer 79 is disposed to the inner wall surface of a cylindrical form 78 and, after incorporating reinforcements 80 to the inside, concrete 81 is placed. After the cure of the concrete 81, when, the form 78 is removed and the outer wall of concrete cylindrical post is washed with water to remove uncured concrete, a cylindrical post 83 having a roughened outer wall surface 82 can be obtained.

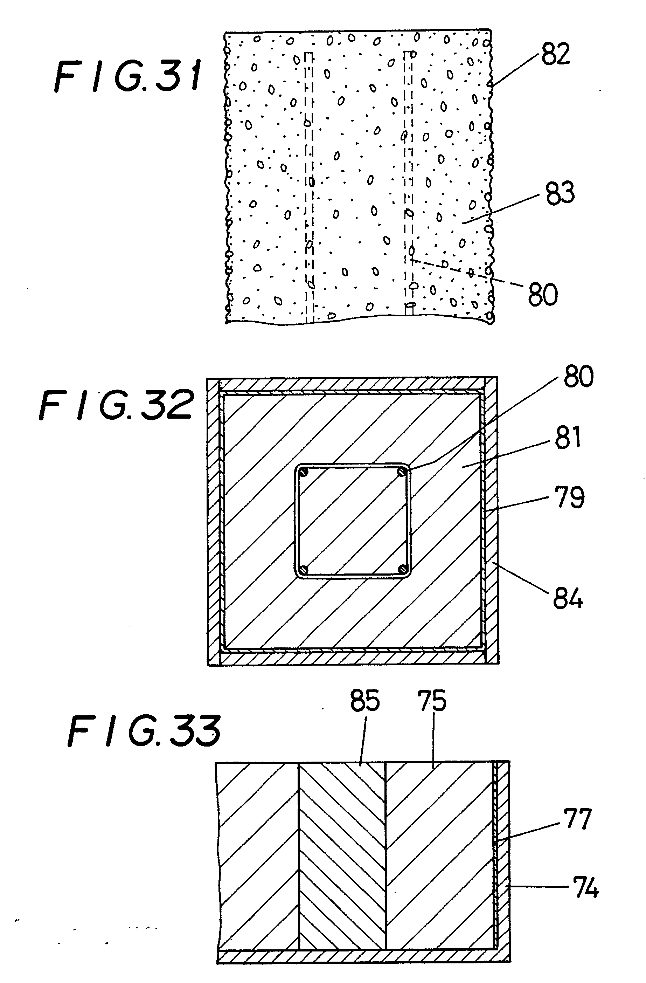

Fig. 32 shows a modified embodiment using a form 84 of a square cross section and the production process is identical with the case of using the cylindrical form as described above.

## Example 14

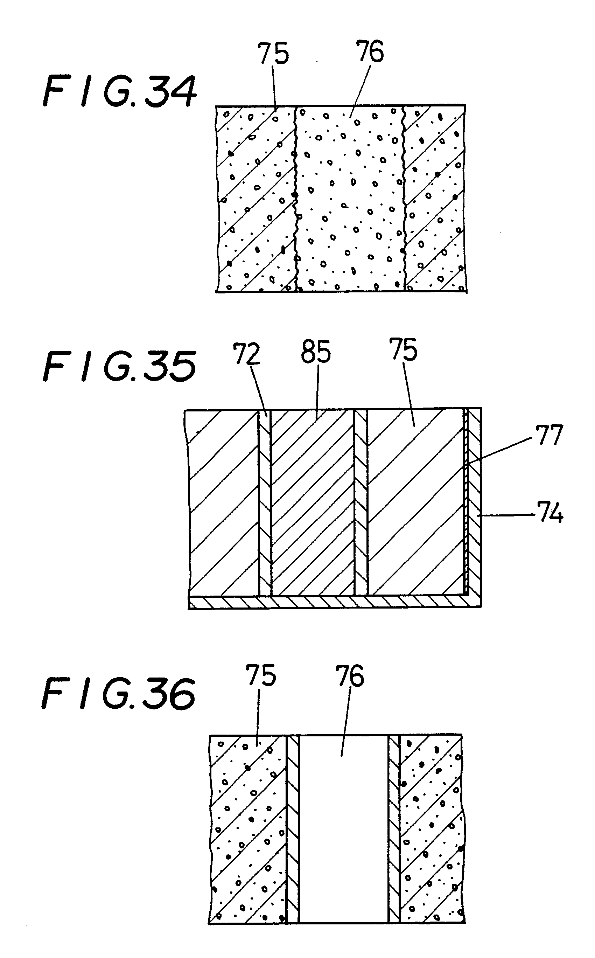

The present invention will be explained referring to an embodiment. shown in Figs. 33 and 34. In this embodiment, a cavity for the space of a pipeway is disposed to a concrete structure after curing. In Example 12 described previously, a vacant hole is disposed to the inside of a concrete structure by disposing the concrete non-cure material layer 73 to the outer wall of the cylindrical form 72.

In this embodiment, a concrete non-cure material is mixed with sand and sand particle coated with the concrete non-cure material are mixed with concrete and compressed and cured to form a composite material 85, which is set at an appropriate portion in a form 74 disposed to the outer circumference, concrete 75 is placed between the form 74 and the composite material 85. After curing the concrete 75, the form 74 is removed and the concrete composite material 85 is crushed, by which a cavity 76 for the piping space having a shape of the composite material 85 can be perforated.

This embodiment utilizes the fact that an easily pulverizable concrete can be prepared by mixing sand particles coated with the concrete non-cure material layer and concrete, and then compressing and curing them. There is no particular restriction for the grain size of said sand particles.

In the embodiment shown in Example 12, since the inside of the cylindrical form 72 is vacant and the material of the form 72 is made of paper, wood, metal or synthetic resin, the specific gravity of the cylindrical form is different from that of the concrete 75. Accordingly, even if the cylindrical form 72 is provisionally attached to the frame 74, there is disadvantage, for example, that the cylindrical form 72 rises upwardly in the step of placing the concrete 75. In view of the above, a care has to be taken in order to accurately dispose a cavity for the piping space to a desired position of the concrete structure, for example, that provisional attachment has to be made strictly. However, in this embodiment, since the specific gravity of composite material 85 is as same as that of the concrete 75, disadvantage such as rising of the form 72 can be prevented.

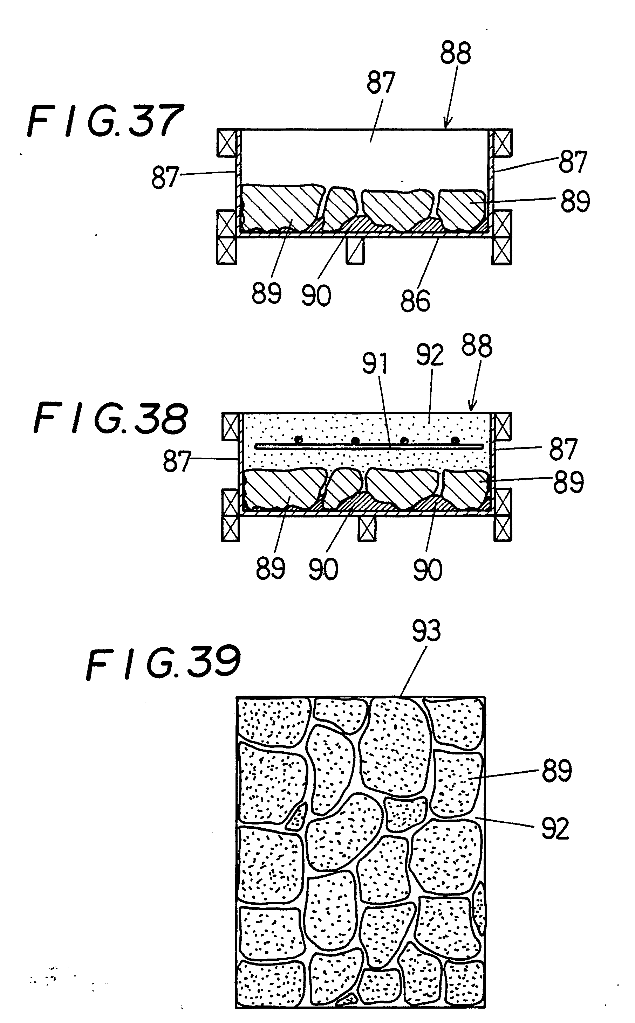

The alternative embodiment can be adopted as shown in Figs. 35 and 36. In this case, a concrete non-cure material is mixed with sand and sand particle coated with the concrete non-cure material are mixed with concrete and compressed and filled into the cylindrical form 72, so composite material 85 is formed and cured in the cylindrical form 72. Then, after setting the cylindrical form 72 to an appropriate portion in a form 74 disposed to the outer circumference, concrete 75 is placed between the form 74 and 72. After curing the concrete 75, the form 74 is removed and the concrete composite material 85 solidified in the cylindrical form 72 is crushed, by which a cavity 76 for the piping space having a shape of the cylindrical form 72 can be perforated.

In this embodiment, the cross sectional shape of the cavity 76 is optional such as a cylindrical or square cylindrical shape depending on the shape of the form 72.

Example 15

This example shows a case of producing a concrete structure with surface decoration or patterning not requiring a form such as a pavement or horizontal decorative surface.

A concrete non-cure material is mixed with sand or gravel and sand particles or gravels coated with the concrete non-cure material are scattered by an appropriate amount to the surface of concrete placed on a horizontal plane before the cure of the concrete. After the cure of the concrete, when the surface of the concrete is washed with water, the scattered sand particles or gravels are thoroughly removed by flushing and a concrete structure with surface decoration or patterning can be produced easily.

Example 16

The present invention will now be explained referring to an embodiment shown in Figs. 37 through 39. On a bottom plate 86 of a box-like form 88 comprising side plates 87, 87 vertically disposed on four sides of the bottom plate 86, decorative stone materials 89, 89 of relatively large thickness are arranged at an appropriate distance and an embedding agent 90 comprising a sodium silicate as the main agent added with an inorganic acidic salt including reinforcing agent as a curing agent is grouted or filled to the gap between each of the stone materials 89, 89.

The protruding amount of the stone materials 89,89 is determined depending on the grouting amount and the agent is grouted by an appropriate amount under visual observation (upto a position lower than the upper surface of the stone material). Steel reinforcements 91 are assembled above the stone material 89 with an appropriate distance. Then, a concrete 92 is placed into the form 88. After applying normal temperature curing or steam curing as it is, the form is removed and, when the obstacles and embedding agent at the surface of the stone material 89 are washed with pressurized water, a concrete block 93 with decoration from which the stone materials 89, 89 are protruded can be obtained.

Claims

1. A concrete non-cure coating material for preventing the surface of cement mortal, etc. which keeps in touch with said concrete non-cure coating material from setting or hardening.

2. A concrete non-cure coating material as defined in claim 1, wherein the material comprises a resin layer or powder made by hardening a liquid prepared by mixing an alkali-swollen agent or water-swollen agent and a high water absorptive polymer and/or monomer.

3. A concrete non-cure coating material as defined in claim 2, wherein the alkali-swollen agent comprises a thermosetting polyester, polyvinyl alcohol and polyvinyl acetal and the water-swollen agent comprises vinyl acetate resin.

4. A concrete non-cure coating material as defined in claim 2, wherein the mixing ratio of the alkali-swollen or water-swollen agent and the high water absorptive polymer and/or monomer is from 20 to 80% of the high water absorptive polymer and/or onomer based on the entire amount (by volume).

5. A concrete non-cure coating material as defined in claim 2, wherein a concrete non-cure coating material layer is formed by means of coating or spraying in a case of liquid. while the concrete non-cure coating material layer is formed by mixing with a water soluble adhesive or with an adhesive and then coating in a case of a powder.

6. A process for producing a concrete product with surface decoration, which comprises provisionally attaching a decorative material to the inner surface of a form by way of a concrete non-cure coating material layer, applying a provisionally grouting treatment to the joint portion of each decorative material, incorporating reinforcements as required, then placing and curing a concrete in the form, removing the form and then removing the concrete non-cure coating material layer on the surface of the decorative material.

7. A process for producing a concrete structure with surface decoration, which comprises, upon constructing a concrete building structure, disposing a concrete non-cure coating material layer to each of the inner surfaces of an inner form and an outer form thereof, or provisionally attaching decorative material by way of the concrete non-cure coating material layer, applying provisional grouting to the joint portion for each of the decorative materials, incorporating necessary reinforcements between the inner form and the outer form, and then, after placing concrete in the form and removing the form, removing the concrete non-cure coating material and uncured concrete.

8. A process for producing the surface of a concrete molding product with surface decoration, which comprises provisionally attaching decorative material to the inner surface of a form, disposing a concrete non-cure coating material layer to the surface of said decorative material, placing a concrete to the inside of the form, then removing the form after the cure of the concrete and then washing the surface of the concrete with water thereby removing uncured concrete.

9. A process for producing a concrete product with surface decoration, which comprises coating a concrete non-cure coating material layer to the inner wall of a box-like form, laying decorative material by way of joint materials, incorporating reinforcements upto a predetermined height, placing a concrete in the form, removing the form after the cure of the concrete, washing the surface of the decorative material with water and removing the joint materials.

10. A production process for producing the concrete product with the surface decoration as defined in claim 9, wherein the inner wall of the form is a bottom wall or a side wall.

11. A process for producing a concrete product or concrete structure with surface decoration, which comprises attaching decorative materials at a predetermined distance to the outside of a cylindrical support, fixing said support with the decorative materials to a form by way of a concrete non-cure coating material layer between the outer surface of each of the decorative materials and the inner surface of the form, incorporating reinforcements to the inside of said support, placing a concrete, removing the form after the cure of the concrete and then removing the uncure concrete on the concrete wall surface by water washing.

12. A process for producing a concrete product with surface decoration, which comprises disposing decorative materials side by side on a porous support, setting the decorative materials in a form with the support being upside, grouting a concrete non-cure coating material layer or sodium silicate resin into a gap between the bottom wall of the form and the decorative material, incorporating reinforcements above the support in the form, placing concrete, removing the form after the curing of the concrete and then removing the concrete non-cure coating material layer or sodium silicate resin by water washing.

13. A process for producing a concrete product with surface decoration, which comprises disposing decorative materials side by side on a porous support by way of a spacer, setting the decorative materials in a form with the support being upside, disposing an optional number of height controlling spacers at an appropriate position of said support thereby controlling the height of the support, grouting a concrete non-cure coating material layer or socium silicate resin between the bottom wall of said form and the surface of said decorative materials, incorporating reinforcement above the support materials, placing a concrete, removing the form after the cure of the concrete and then removing said concrete non-cure coating material layer or sodium silicate resin by water washing.

14. A process for producing a concrete product with surface decoration, which comprises securing wooden blocks each by a fixing means on a support, inserting a group of wooden blocks in a form with the support being upside, disposing a concrete non-cure coating material layer to the surface of the group of said wooden blocks, grouting sodium silicate resin into the joint portion for each of wooden blocks, incorporating reinforcements in said form, placing concrete, removing the form after the cure of the concrete and then removing the concrete non-cure coating material layer at the surface of the wooden block by water washing.

15. A process for producing a concrete product or concrete structure with surface decoration as defined in any one of claims 6, 7, 8, 9, 11, 12, 13 and 14, wherein the decorative material is made of stone, sintered product, tile, metal material, glass or wooden block.

16. A process for producing a concrete product or concrete structure with surface decoration as defined in any one of claims 11, 12, 13 and 14, wherein the support is made of mesh plate, punched metal, expansion metal, metal wire-lattice plate, resin mesh plate, glass fiber mesh plate or carbon mesh plate.

17. A process for producing a concrete product or concrete ctructure with surface decoration as defined in claim 13, wherein the height-controlling spacer comprises a support cylinder and a bolt or device for controlling the height of said supporting cylinder.

18. A process for producing the surface of a concrete molding product at joint portions, which comprises disposing a concrete non-cure coating material layer to the inner surface of a form of a concrete structure which forms a secondary placing side, placing a concrete to the inside of the form, and removing the uncured concrete by water washing from the surface of the concrete after removal of the form.

19. A process for producing the surface of a concrete molding product with surface decoration, which comprises disposing a cylindrical form having a concrete non-cure coating material layer disposed to the outer wall thereof into a form for a concrete structure, placing a concrete between said cylindrical form and the form for the structure, removing the forms after the cure of the concrete and water washing the surface removed with the cylindrical form thereby removing the uncured concrete.

20. A process for producing the surface of a concrete molding product with surface decoration as defined in claim 19, wherein the cylindrical form is a circular cylindrical or square cylindrical form.

21. A process for producing the patterning or decorative surface of a concrete molding product, which comprises incorporating reinforcement in a cylindrical form having a concrete non-cure coating material layer to the inner wall thereof, placing a concrete, removing a form after the cure of the concrete and then water washing the outer wall of said constructed concrete post thereby removing the uncured concrete.

22. A process for producing the patterning or decorative surface of a concrete molding product as defined in claim 21, wherein the cylindrical form is a circular cylindrical, square cylindrical, triangularly, hexagonaly or octagonaly form.

23. A molding decorative material on the surface of a concrete molding product, wherein a concrete maintained uncured by the concrete non-cure coating material layer deposited to the surface of concrete is removed by water washing thereby developing a three dimensional pattern.

24. A concrete structure prepared by coating sand particles coated with a concrete non-cure coating material and then mixing them with concrete and compressing and curing them.

25. A process for producing a concrete structure with surface decoration, which comprises scattering sand particles or gravels coated with the concrete non-cure coating material on the surface of placed concrete, before curing, and then water washing the surface of concrete after the cure of the concrete.

26. A concrete non-cure coating material as defined in claim 1, which is an embedding agent comprising a mixture of sodium silicate and a curing agent incorporated with reinforcing agent and which is removable by water washing.

27. A process for producing a concrete product or concrete structure with surface decoration, which comprises disposing a plurality of decorative materials on a bottom plate of a box-like form, grouting an embedding agent to a predetermined depth into a gap between said bottom plate and said decorative materials, incorporating enforcements above said decorative materials, placing concrete, removing a form after the cure of the concrete and then removing the embedding agent between said decorative materials by water washing.

28. A process for producing a concrete product or concrete structure with surface decoration as defined in claim 27, wherein the decorative material comprises stone material, sintered product, tile, metal material, glass or wooden block.

# F I G. 1

8  1  2  5  6  16

1a  4  3  7

# F I G. 2

2

3  4

# F I G. 3

1  12  13

9  1a  14

F I G. 4

F I G. 5

F I G. 6

# FIG. 7

20

22  21

# FIG. 8

24

23

25

27

26

23 a

28

# FIG. 9

27

28

26

FIG.10

FIG.11

FIG.12

FIG.13

FIG.14

## F I G.15

## F I G.16

**FIG.17**

**FIG.18**

**FIG.19**

# F I G.20

51 62 60 52 61

94 64 63 59 56

# F I G.21

54 62 58 57 51

61 63 55 61

# F I G.22 66

65 67

# F I G.23

# F I G.24

# F I G.25

70

68

69

# F I G.26

71  70

# F I G.27

71

70

EP 0 401 051 A2

## F I G. 28

## F I G. 29

## F I G. 30

FIG.31

FIG.32

FIG.33

F I G.34

75  76

F I G.35

72  85  75

77

74

F I G.36

75  76

FIG.37

FIG.38

FIG.39